# EUROPÄISCHE PATENTSCHRIFT

(11) **EP 2 607 731 B1**
(45) Veröffentlichungstag und Bekanntmachung des Hinweises auf die Patenterteilung: **15.10.2014**
(21) Anmeldenummer: 11194329.6
(22) Anmeldetag: 19.12.2011
(51) Int. Cl.: F16C 32/04, H02K 7/09

(54) **Magnetisches Radiallager mit sternförmig geblechtem Rotor**
Magnetic radial bearing with radial laminated rotor
Palier radial magnétique avec rotor à tôles en étoile

(43) Veröffentlichungstag der Anmeldung: 26.06.2013
(73) Patentinhaber: Siemens Aktiengesellschaft, 80333 München (DE)
(72) Erfinder: Bott, Erich, 97618 Hollstadt (DE); Vollmer, Rolf, 36129 Gersfeld (DE)

(56) Entgegenhaltungen:
- GB-A- 2 246 401
- JP-A- 11 101 233
- US-A- 5 729 072
- US-A- 6 121 704
- US-B1- 6 268 674

## Beschreibung

Die vorliegende Erfindung betrifft ein magnetisches Radiallager mit einem Stator und einem Rotor, der in dem Stator drehbar gelagert ist, wobei der Rotor eine Welle besitzt, die Welle von einer ringförmigen Blechpaketanordnung umgeben ist, und die Blechpaketanordnung Einzelbleche aufweist.

Bei einem herkömmlichen magnetischen Radiallager weist der Stator Spulen auf, die radial nach innen zu der zu lagernden Welle gerichtet sind, d.h. die Spulenachsen verlaufen im Wesentlichen radial.

Aus dem Buch "Magnetic Bearings" von Gerhard Schweitzer und Eric H. Masslen, Springer Verlag Berlin, 2009, XV, Seiten 82-84 und 96, sind auch radiale Magnetlager mit axialen Spulen bekannt. Dies bedeutet, dass sich die Spulenachsen parallel zur Lagerachse erstrecken. Dementsprechend erfolgt die Flussführung sowohl in den Spulen als auch im Rotor im Wesentlichen in axialer Richtung.

Magnetische Radiallager müssen hochdynamische Störgrößen ausregeln können. Dabei soll die Kraft dem Strom mit möglichst geringer Verzögerung folgen. Durch Wirbelströme im Rotor gibt es eine zeitabhängige Feldverdrängung, was zu einer Frequenzabhängigkeit der Lagerkraft führt. Außerdem führen die Wirbelströme zu Verlusten und Erwärmung des Rotors. Hierdurch wird letztlich der Wirkungsgrad der Maschine reduziert. Um dem entgegenzuwirken, ist vielfach ein geblechter, magnetischer Rückschluss auf der Welle vorgesehen, der die Wirbelströme reduziert.

Für die Wirbelstromverluste sind im Wesentlichen die Polzahlen der Magnetfelder, die Wellendrehzahl und die Art der Blechung verantwortlich. Um geringe Ummagnetisierungsfrequenzen zu erreichen, wird eine geringe Polzahl angestrebt. Dadurch dringt aber das magnetische Feld tief in den Rotor ein und erfordert somit eine Blechung mit hohem Rotorjoch, was dann zu einer dünnen Welle führt. Wenn kritische Schwingneigungen überschritten werden, muss die Polzahl erhöht werden, was wieder zu höheren Frequenzen und Verlusten führt.

Aus der US 6 121 704 A und der JP 11 101233 A sind magnetische Radiallager bekannt, die einen Stator und einen Rotor mit einer Welle aufweisen. Die Welle ist von einer ringförmigen Blechanordnung umgeben, wobei die Einzelbleche der Blechanordnung bezogen auf die Achse der Welle sternförmig angeordnet sind. Die Einzelbleche sind I-förmig ausgebildet und in Umfangsrichtung zusammengesteckt. Die Einzelbleche sind mit einem Halteelement und einem Fixierring an der Welle befestigt.

Des Weiteren beschreibt die GB 2 246 401 A ein magnetisches Axialdrucklager bei dem der Stator und der Rotor eine Mehrzahl von Einzelblechen aufweist, die bezogen auf die Achse einer Welle radial ausgerichtet sind. Die Einzelbleche des Rotors sind an einer Nabe abgestützt.

In der US 5 729 072 A ist ein Stator für eine elektrische Maschine beschrieben, der geblechte Eisenkerne aufweist. Die geblechten Eisenkerne sind an der Außenfläche des Stators durch Schweißen miteinander verbunden.

Die Aufgabe der vorliegenden Erfindung besteht darin, ein magnetisches Radiallager bereitzustellen, bei dem die Wirbelströme weiter reduziert werden.

Erfindungsgemäß wird diese Aufgabe gelöst durch ein magnetisches Radiallager gemäß Patentanspruch 1. Das Radiallager umfasst einen Stator, und einen Rotor, der in dem Stator drehbar gelagert ist, wobei der Rotor eine Welle besitzt, die Welle von einer ringförmigen Blechpaketanordnung umgeben ist, und die Blechpaketanordnung Einzelbleche aufweist, wobei die Einzelbleche der Blechpaketanordnung bezogen auf die Achse der Welle sternförmig angeordnet sind.

In vorteilhafter Weise besitzt also der Rotor des magnetischen Lagers Einzelbleche, die bezogen auf die Rotorachse sternförmig nach außen stehen. Damit können Wirbelströme in tangentialer Richtung bzw. in Umfangsrichtung stark reduziert werden.

Die Blechpaketanordnung besitzt eine Hülse, die auf der Welle befestigt ist. Damit lässt sich die Blechpaketanordnung mit wenigen Handgriffen sicher auf einer Welle befestigen. Dabei ist die Hülse durch die Einzelbleche der Blechpaketanordnung selbst gebildet, indem die Einzelbleche entsprechend ringförmig aneinander angeordnet werden.

Benachbarte Einzelbleche der Blechpaketanordnung sind stoffschlüssig miteinander verbunden. Insbesondere können die benachbarten Einzelbleche der Blechpaketanordnung miteinander verschweißt sein. Die Einzelbleche der Blechpaketanordnung können aber auch miteinander verlötet oder verklebt sein. Mit einer derartigen stoffschlüssigen Verbindung lässt sich eine einfach zu montierende Hülse realisieren. Alternativ könnten die benachbarten Einzelbleche auch formschlüssig miteinander verbunden sein.

Zudem ist die Hülse auf die Welle aufgeschrumpft. Damit bedarf es keiner zusätzlichen Komponente zum Befestigen der Hülse auf der Welle. Außerdem entsteht durch das Aufschrumpfen eine sehr widerstandsfähige Verbindung.

Zwischen zwei benachbarten Einzelblechen der Blechpaketanordnung kann jeweils ein keilförmiger Spalt bestehen. Dies ist insbesondere dann der Fall, wenn die Einzelbleche in radialer Richtung bezogen auf die Rotorachse konstante Dicke aufweisen.

In einer speziellen Ausführungsform grenzen die Einzelbleche am Innenumfang der Blechpaketanordnung jeweils unmittelbar an ihre benachbarten Einzelbleche an. Dadurch erhält die Blechpaketanordnung einen lückenlosen Innenmantel. Dadurch ergibt sich auch die dichteste sternförmige Paketierung in Umfangsrichtung.

Wie oben erwähnt, besteht gegebenenfalls zwischen benachbarten Einzelblechen der Blechpaketanordnung jeweils ein keilförmiger Spalt. Dieser keilförmige Spalt ist vorzugsweise mit einem nicht-leitenden Feststoff gefüllt. Dieser nichtleitende Feststoff sorgt für die Unterbrechung des Stromflusses in Umfangsrichtung des Rotors. Prinzipiell müssen die keilförmigen Spalte zwischen den Einzelblechen nicht gefüllt sein. Dann ist die Blechpaketanordnung aber weniger stabil und hat einen höheren Laufwiderstand.

Der Feststoff für das Füllen der keilförmigen Spalte kann aus einem Kunststoff, einem Glas oder einer Keramik bestehen. Insbesondere eignet sich als Feststoff ein Epoxidharz oder ein niedrig-schmelzendes Glas. Gegebenenfalls kann die verwendete Keramik auch gesintert sein.

Die vorliegende Erfindung wird nun anhand der beigefügten Zeichnungen näher erläutert, in denen zeigen:
- FIG 1: einen Längsschnitt durch den Rotor eines magnetischen Radiallagers entlang der Rotorachse;
- FIG 2: einen vergrößerten Abschnitt von FIG 1;
- FIG 3: eine Stirnseitenansicht des Rotors von FIG 1;
- FIG 4: eine Stirnseitenansicht einer erfindungsgemäßen sternförmigen Blechpaketanordnung;
- FIG 5: die Blechpaketanordnung von FIG 4 auf einer Welle;
- FIG 6: einen vergrößerten Ausschnitt der Blechpaketanordnung von FIG 4 in perspektivischer Ansicht; und
- FIG 7: den Ausschnitt von FIG 6 in Stirnseitenansicht.

Die nachfolgend näher geschilderten Ausführungsbeispiele stellen bevorzugte Ausführungsformen der vorliegenden Erfindung dar.

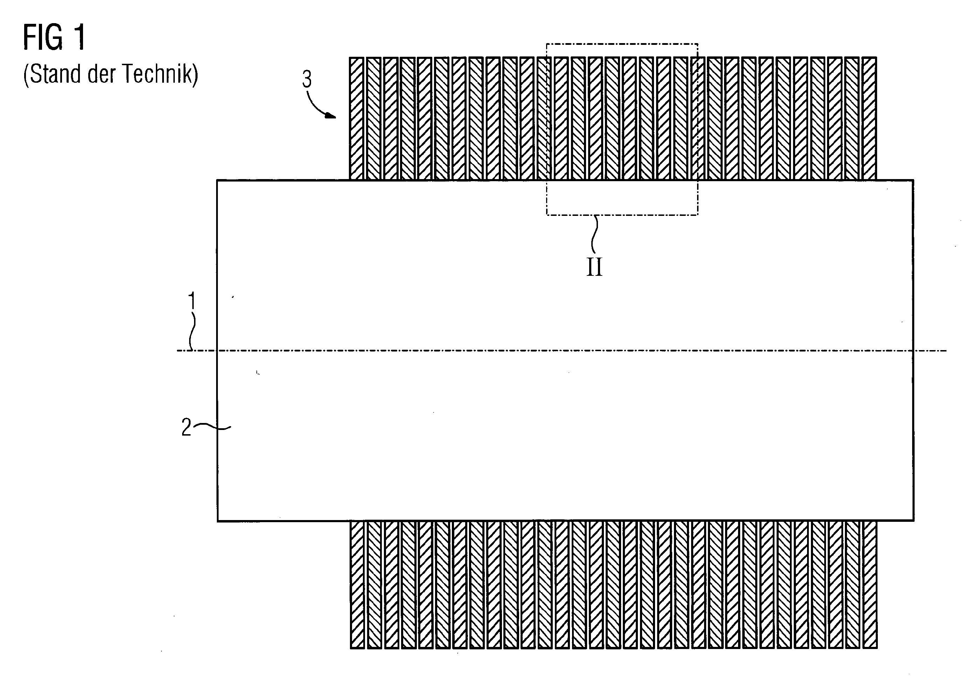

Zum besseren Verständnis der Erfindung wird jedoch zunächst anhand der FIG 1 bis 3 der Stand der Technik näher erläutert.

Ein magnetisches Radiallager besitzt einen Stator und einen Rotor. Der Stator besitzt üblicherweise ein Gehäuse, das hohlzylindrisch ausgebildet ist. Im Inneren des Gehäuses befinden sich, angeschmiegt an die Gehäusewand oder zumindest der Gehäusewand nachgebildet, eine Mehrzahl von Spulen, vorzugsweise vier Spulen. Bei diesen Spulen handelt es sich um Axialspulen oder Radialspulen. Dies bedeutet, dass die Spulenachsen entweder parallel zur Lagerachse oder senkrecht zu diesen verlaufen. Radial innerhalb der Spulen ergibt sich ein Freiraum, in dem der Rotor frei beweglich ist. Ein derartiger Rotor ist in FIG 1 im Längsschnitt, d.h. in einem Schnitt parallel zur Rotationsachse 1 des Rotors, dargestellt.

Der in FIG 1 wiedergegebene Rotor besitzt eine zylinderförmige Welle 2. Diese ist in einem Teil von einem Standardrotorblechpaket 3 umgeben.

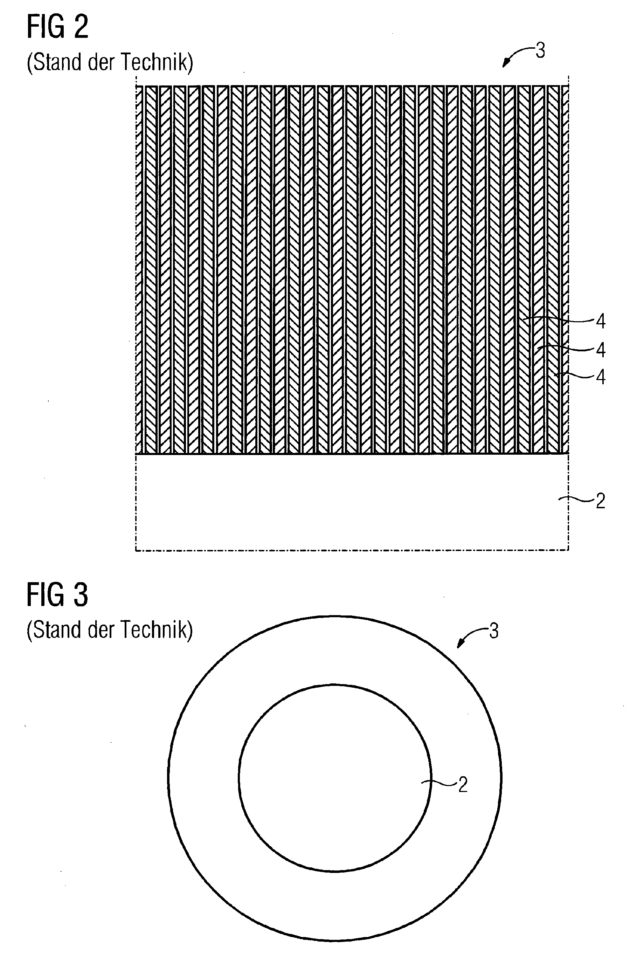

Ein vergrößerter Ausschnitt II im Bereich des Standardrotorblechpakets 3 ist in FIG 2 wiedergegeben. Hier sind die Einzelbleche 4 des Blechpakets zu erkennen, die auf der Welle 2 angeordnet sind. Die Einzelbleche 4 erstrecken sich jeweils hauptsächlich in einer Ebene senkrecht zur Rotationsachse 1 des Rotors. Dies bedeutet, dass die Einzelbleche 4 in axialer Richtung gestapelt sind. Damit können axiale Komponenten von Wirbelströmen wirksam unterbunden werden.

FIG 3 zeigt den Rotor von FIG 1 in der Stirnseitenansicht. Auf der Welle 2 ist die ringförmige Standardblechpaketanordnung 3 aufgebracht.

Die anhand der FIG 1 bis 3 dargelegte Blechpaketanordnung 3 ist aber für eine axiale Komponente des magnetischen Flusses unwirksam und erhöht den magnetischen Widerstand in axialer Richtung. Daher ist der Wirkungsgrad eines derartigen magnetischen Radiallagers unter Umständen eingeschränkt.

Aus der Sicht des Rotors eines Radiallagers liegt ein magnetisches Wechselfeld vor, dessen Frequenz von der Ständerpolzahl und der Drehzahl abhängig ist. Die Ständerpolzahl sollte möglichst klein sein. Wenn möglich, sollte daher für den Stator des Radiallagers die Polpaarzahl 2 gewählt werden. Dennoch werden im Rotor durch Flussänderungen in den elektrisch leitfähigen Bereichen Ströme induziert, was spezielle Maßnahmen zur Reduzierung der Wirbelströme erfordert.

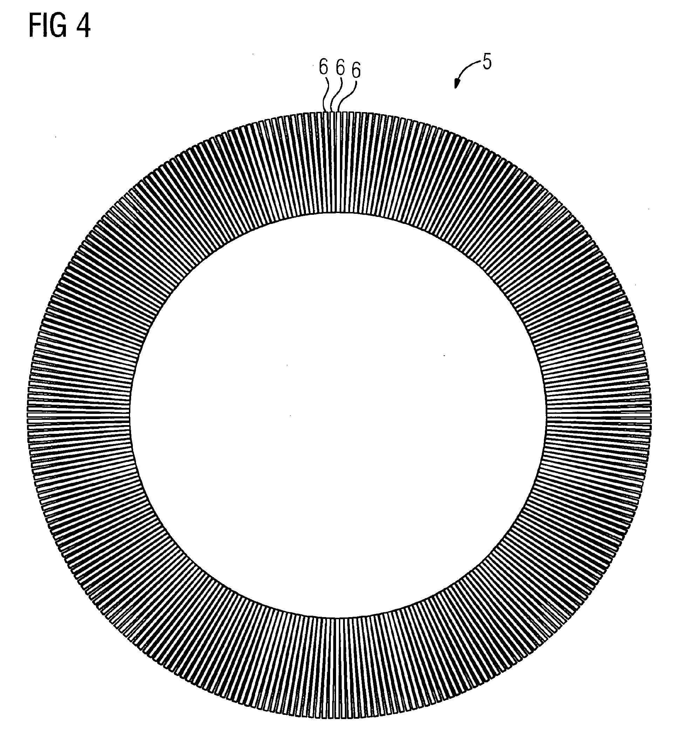

Erfindungsgemäß ist daher für den Rotor eine Blechpaketanordnung vorgesehen, deren Einzelbleche radial bzw. sternförmig nach außen ragen. Eine derartige Blechpaketanordnung ist in FIG 4 in Stirnseitenansicht wiedergegeben. Die Blechpaketanordnung 5 ist hier wie in dem Beispiel der FIG 1 bis 3 ringförmig ausgebildet. In dem speziellen Beispiel hat sie die Figur eines Hohlzylinders. Sie kann auch als Sternblechhülse bezeichnet werden, da sie für den Rotor die Funktion einer Hülse besitzt und sternförmig nach außen stehende Bleche aufweist. Jedes der Einzelbleche 6 verläuft im Wesentlichen in einer Ebene parallel durch die Achse der ringförmigen Blechpaketanordnung 5.

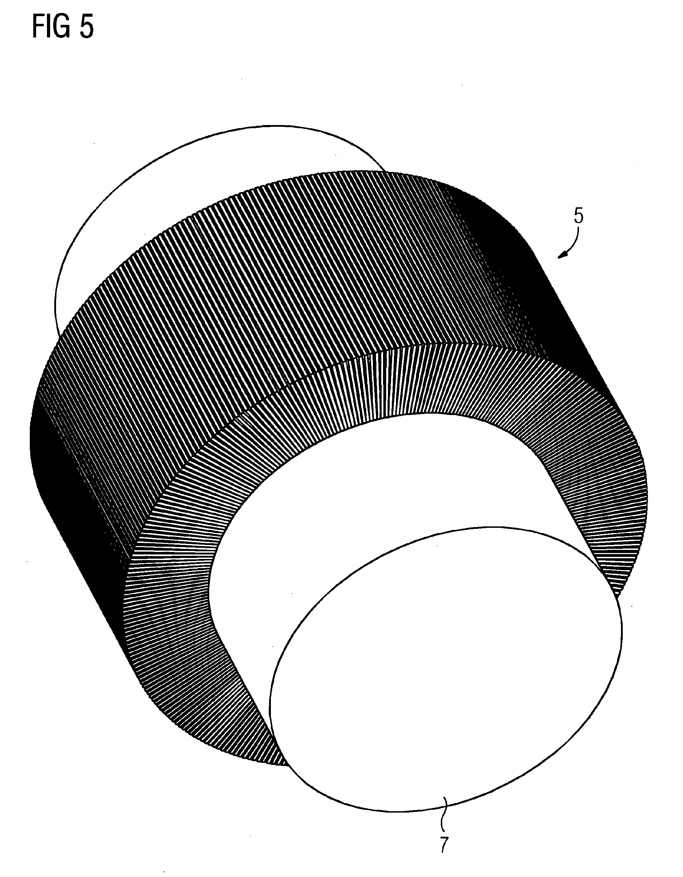

In FIG 5 ist die Blechpaketanordnung 5 in perspektivischer Ansicht wiedergegeben. Sie ist hier auf einer Welle 7 befestigt. Die ringförmige Blechpaketanordnung 5 besitzt einen Innendurchmesser, der in etwa dem Außendurchmesser der Welle 7 entspricht. Die Blechpaketanordnung 5 ist auf die Welle 7 des Rotors aufgeschrumpft. Hierzu besitzt die Blechpaketanordnung 5 einen geringfügig kleineren Innendurchmesser als der Außendurchmesser der Welle 7.

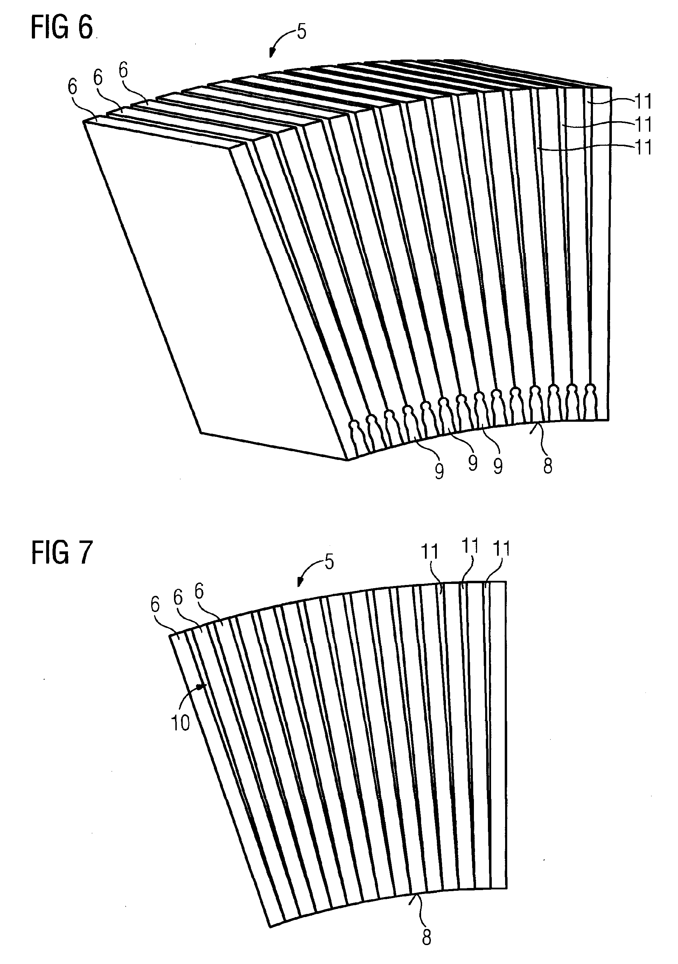

FIG 6 gibt einen Ausschnitt der Blechpaketanordnung 5 der FIG 4 und 5 in perspektivischer Ansicht wieder. Es sind dort die Einzelbleche 6 gut zu erkennen, die sternförmig bzw. radial nach außen abstehen. Sämtliche Einzelbleche 6 besitzen die gleiche Dicke. Dadurch, dass sie sternförmig nach außen ragen, ergibt sich zwischen zwei benachbarten Einzelblechen 6 jeweils ein keilförmiger Spalt 11. Dieser keilförmige Spalt verjüngt sich in Richtung radial zum Zentrum der Blechpaketanordnung 5. In axialer Richtung verändert sich der Querschnitt des Spalts 11 nicht.

Die Einzelbleche 6 liegen am Innenmantel 8 unmittelbar aneinander, d.h. am Innenmantel 8 besteht keine Lücke zwischen den Einzelblechen 6. Daher werden sie vorzugsweise an dieser Stelle aneinander befestigt.

In dem Beispiel von FIG 6 sind die Einzelbleche 6 stoffschlüssig miteinander verbunden. Speziell sind sie miteinander verschweißt. Dies ist in FIG 6 mit Schweißzonen 9 angedeutet. Diese Schweißzonen 9 entstehen beispielsweise durch Elektroschweißen. Sie verlaufen über eine gewisse radiale Strecke. Zentrum jeder einzelnen Schweißzone 9 ist immer der Bereich, in dem zwei benachbarte Einzelbleche 6 aneinander angrenzen. Durch das Verschweißen sind die Einzelbleche 6 in einem vorgegebenen radialen Abschnitt fest miteinander verbunden und sie klaffen immer weiter auseinander, je weiter der Abstand vom Innenmantel 8 ist.

In FIG 7 ist der Blechpaketabschnitt von FIG 6 in der Stirnseitenansicht dargestellt. In dieser Perspektive sind wiederum die Einzelbleche 6, die vom Innenmantel 8 der ringförmigen Blechpaketanordnung 5 radial bzw. sternförmig nach außen ragen, und die keilförmigen Spalte 11 zwischen den Einzelblechen 6 zu erkennen. Die Spalte 11 sind hier nicht mit Luft gefüllt, sondern es ist in FIG 7 graphisch angedeutet, dass die Spalte 11 mit einem Füllstoff 10 gefüllt sind. Dieser Füllstoff 10 sollte ein elektrisch nicht-leitender, organischer oder anorganischer Feststoff sein. Insbesondere eignet sich als Füllstoff 10 Epoxidharz. Alternativ kann zum Füllen auch ein niedrig-schmelzendes Glas oder eine Keramik verwendet werden. Gegebenenfalls wird die Keramik in den Spalt 11 gesintert, sodass sich ein entsprechender Stoffschluss ergibt.

Das Füllen der Spalte 11 hat insbesondere bei hohen Drehzahlen Vorteile. Das Füllen verringert nämlich nicht nur den Luftwiderstand (am Außenumfang der ringförmigen Blechpaketanordnung treten weniger Luftwirbel auf), sondern es sorgt auch für eine erhöhte Festigkeit der Blechpaketanordnung.

Die sternförmig geblechte Hülse stellt also ein Bauteil dar, welches leicht auf die Welle eines magnetischen Radiallagers aufgebracht werden kann und hier für reduzierte Wirbelströme in Umfangsrichtung sorgt. Außerdem ergibt sich dadurch ein verminderter magnetischer Widerstand in axialer Richtung.

## Patentansprüche

1. Magnetisches Radiallager mit
- einem Stator, und
- einem Rotor, der in dem Stator drehbar gelagert ist, wobei
- der Rotor eine Welle (7) besitzt,
- die Welle (7) von einer ringförmigen Blechpaketanordnung (5) umgeben ist, und
- die Blechpaketanordnung (5) Einzelbleche (6) aufweist, wobei
- die Einzelbleche (6) der Blechpaketanordnung (5) bezogen auf die Achse der Welle (7) sternförmig angeordnet sind und wobei
- die Blechpaketanordnung (5) eine Hülse aufweist, die auf der Welle (7) befestigt ist,
**dadurch gekennzeichnet, dass**
- benachbarte Einzelbleche (6) der Blechpaketanordnung (5) stoffschlüssig miteinander verbunden sind,
- die Hülse durch die Einzelbleche (6) der Blechpaketanordnung (5) gebildet ist und
- die Hülse auf die Welle (7) aufgeschrumpft ist.

2. Magnetisches Radiallager nach Anspruch 1, wobei zwischen benachbarten Einzelblechen (6) der Blechpaketanordnung (5) jeweils ein keilförmiger Spalt (11) besteht.

3. Magnetisches Radiallager nach einem der vorhergehenden Ansprüche, wobei die Einzelbleche (6) am Innenumfang der Blechpaketanordnung (5) jeweils unmittelbar an ihre benachbarten Einzelbleche (6) angrenzen.

4. Magnetisches Radiallager nach einem der vorhergehenden Ansprüche, wobei benachbarte Einzelbleche (6) der Blechpaketanordnung (5) miteinander verschweißt sind.

5. Magnetisches Radiallager nach einem der Ansprüche 2 bis 4, wobei der keilförmige Spalt (11) mit einem nicht-leitenden Feststoff (10) gefüllt ist.

6. Magnetisches Radiallager nach Anspruch 5, wobei der Feststoff (10) aus einem Kunststoff, einem Glas oder einer Keramik besteht.

## Claims

1. Magnetic radial bearing having
- a stator, and
- a rotor which is rotatably mounted in the stator, wherein
- the rotor has a shaft (7),
- the shaft (7) is surrounded by an annular laminate stack arrangement (5), and
- the laminate stack arrangement (5) has individual laminates (6), wherein
- the individual laminates (6) of the laminate stack arrangement (5) are arranged in a star-shaped manner with respect to the axis of the shaft (7) and wherein
- the laminate stack arrangement (5) has a sleeve which is fastened to the shaft (7),
**characterised in that**
- adjacent individual laminates (6) of the laminate stack arrangement (5) are connected together with integral fit,
- the sleeve is formed by the individual laminates (6) of the laminate stack arrangement (5) and
- the sleeve is shrunk onto the shaft (7).

2. Magnetic radial bearing according to claim 1, wherein there is one wedge-shaped gap (11) respectively between adjacent individual laminates (6) of the laminate stack arrangement (5).

3. Magnetic radial bearing according to one of the preceding claims, wherein at the internal circumference of the laminate stack arrangement (5) the individual laminates (6) each directly adjoin their adjacent individual laminates (6).

4. Magnetic radial bearing according to one of the preceding claims, wherein adjacent individual laminates (6) of the laminate stack arrangement (5) are welded together.

5. Magnetic radial bearing according to one of claims 2 to 4, wherein the wedge-shaped gap (11) is filled by a nonconductive solid (10).

6. Magnetic radial bearing according to claim 5, wherein the solid (10) is composed of a plastic, a glass or a ceramic.

## Revendications

1. Palier radial magnétique comprenant
- un stator et
- un rotor, qui est monté tournant dans le stator, dans lequel
- le rotor a un arbre ( 7 ),
- l'arbre ( 7 ) est entouré d'un agencement ( 5 ) annulaire de paquets de tôle et
- l'agencement ( 5 ) de paquets de tôle a des tôles ( 6 ) individuelles, dans lequel
- les tôles ( 6 ) individuelles de l'agencement ( 5 ) du paquet de tôle sont, rapportées à l'axe de l'arbre ( 7 ), disposées en forme d'étoile et
dans lequel
- l'agencement ( 5 ) de paquets de tôle a un manchon, qui est fixé sur l'arbre ( 7 ),
**caractérisé en ce que**
- des tôles ( 6 ) individuelles, voisines de l'agencement ( 5 ) de paquets de tôle, sont reliées entre elles à complémentarité de matière,
- le manchon est formé par les tôles ( 6 ) individuelles de l'agencement ( 5 ) de paquets de tôle et
- le manchon est rétreint sur l'arbre ( 7 ).

2. Palier radial magnétique suivant la revendication 1, dans lequel une fente ( 11 ) cunéiforme existe respectivement entre des tôles ( 6 ) individuelles voisines de l'agencement ( 5 ) de paquets de tôle.

3. Palier radial magnétique suivant l'une revendications précédentes, dans lequel les tôles ( 6 ) individuelles sont, sur le pourtour intérieur de l'agencement ( 5 ) de paquets de tôle, respectivement voisines directement de leurs tôles ( 6 ) individuelles voisines.

4. Palier radial magnétique suivant l'une revendications précédentes, dans lequel des tôles ( 6 ) individuelles, voisines de l'agencement ( 5 ) de paquets de tôle, sont soudées entre elles.

5. Palier radial magnétique suivant l'une revendications 2 à 4, dans lequel la fente ( 11 ) cunéiforme est remplie d'une matière ( 10 ) solide non conductrice.

6. Palier radial magnétique suivant la revendication 5, dans lequel la matière ( 10 ) solide est en une matière plastique en un verre ou en une céramique.
